(19) Europäisches Patentamt
European Patent Office
Office européen des brevets

(11) **EP 2 534 530 B1**

(12) **FASCICULE DE BREVET EUROPEEN**

(45) Date de publication et mention de la délivrance du brevet:
**20.04.2016 Bulletin 2016/16**

(21) Numéro de dépôt: **11710312.7**

(22) Date de dépôt: **08.02.2011**

(51) Int Cl.:
***G02C 7/06*** (2006.01)

(86) Numéro de dépôt international:
**PCT/IB2011/050529**

(87) Numéro de publication internationale:
**WO 2011/098952 (18.08.2011 Gazette 2011/33)**

(54) **LENTILLE OPHTALMIQUE MULTIFOCALE PROGRESSIVE**

GLEITSICHTLINSE

PROGRESSIVE MULTI-FOCAL OPHTHALMIC LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.02.2010 FR 1050897**

(43) Date de publication de la demande:
**19.12.2012 Bulletin 2012/51**

(73) Titulaire: **Essilor International (Compagnie Générale d'Optique) 94220 Charenton-le-Pont (FR)**

(72) Inventeurs:
• **BERTHEZENE, Marie-Anne F-94220 Charenton-le-Pont (FR)**
• **BOURDONCLE, Bernard F-94220 Charenton-le-Pont (FR)**
• **CALIXTE, Laurent F-94220 Charenton-le-Pont (FR)**
• **GUILLOUX, Cyril F-94220 Charenton-le-Pont (FR)**
• **MOUSSET, Soazic F-94220 Charenton-le-Pont (FR)**
• **PAILLE, Damien F-94220 Charenton-le-Pont (FR)**

(74) Mandataire: **Cabinet Plasseraud 66, rue de la Chaussée d'Antin 75440 Paris Cedex 09 (FR)**

(56) Documents cités:
**EP-A1- 1 744 202      WO-A1-2006/045642
WO-A1-2008/089996      WO-A2-2006/026057**

**Description**

La présente invention concerne des lentilles finies et semi-finies, ophtalmiques, multifocales et progressives comportant une surface complexe comprenant une zone de vision de loin, une zone de vision de près, une zone de vision intermédiaire, et une méridienne principale de progression traversant ces trois zones.

Il peut être prescrit à un porteur une correction en puissance, positive ou négative. Pour les porteurs presbytes, la valeur de la correction de puissance est différente en vision de loin et en vision de près, du fait de difficultés d'accommodation en vision de près. La prescription est alors composée d'une valeur de puissance en vision de loin et d'une addition représentative de l'incrément de puissance entre la vision de loin et la vision de près. L'addition est qualifiée d'addition prescrite. Les lentilles ophtalmiques qui compensent la presbytie sont des lentilles multifocales, les plus adaptées étant les lentilles multifocales progressives.

Les lentilles ophtalmiques multifocales progressives sont maintenant bien connues. De telles lentilles sont utilisées pour compenser la presbytie et permettent au porteur des lunettes d'observer des objets dans une large gamme de distances, sans avoir à retirer ses lunettes. Les lentilles multifocales progressives comportent typiquement une zone de vision de loin, située dans le haut de la lentille, une zone de vision de près, située dans le bas de la lentille, une zone intermédiaire reliant la zone de vision de près et la zone de vision de loin, ainsi qu'une méridienne traversant les trois zones.

Le document FR-A-2 699 294 décrit dans son préambule les différents éléments d'une telle lentille ophtalmique multifocale progressive, ainsi que les travaux menés par la demanderesse pour améliorer le confort des porteurs de telles lentilles. On se référera à ce document pour plus de précisions sur ces différents points.

La demanderesse a aussi proposé, par exemple dans les brevets US-A-5 270 745 ou US-A-5 272 495 de faire varier la méridienne, notamment la position en un point de contrôle de la vision de près, en fonction de l'addition et de l'amétropie.

La demanderesse a encore proposé, pour mieux satisfaire les besoins visuels des presbytes et améliorer le confort des lentilles multifocales progressives, diverses améliorations (US-A-5 270 745, US-A-5 488 442, FR-A-2 704 327).

Habituellement, les lentilles multifocales progressives comportent une surface asphérique ou complexe, par exemple la surface opposée au porteur des lunettes, et une surface sphérique ou torique, dite surface de prescription. On entend par surface asphérique, une surface différente d'une partie de sphère. La surface sphérique ou torique permet d'adapter la lentille à l'amétropie du porteur, de sorte qu'une lentille multifocale n'est généralement définie que par sa surface complexe. La définition de la lentille se limite dans un tel cas à la recherche d'une surface optimisée pour la surface complexe.

Comme il est bien connu, une telle surface complexe est généralement définie par l'altitude de tous ses points. On utilise aussi les paramètres constitués par les courbures minimales et maximales en chaque point, ou plus couramment leur demi-somme et leur différence. Cette demi-somme et la valeur absolue de cette différence multipliées par un facteur n-1, n étant l'indice de réfraction du matériau de la lentille, sont appelées sphère moyenne et cylindre.

On définit des familles de lentilles multifocales progressives, chaque lentille d'une famille étant caractérisée par une addition optique, qui correspond à la variation de puissance entre la zone de vision de loin et la zone de vision de près. Plus précisément, l'addition optique, notée $Add_{opt}$, correspond à la variation de puissance entre un point L de la zone de vision de loin et un point P de la zone de vision de près, qui sont appelés respectivement point de référence pour la vision de loin et point de référence pour la vision de près, et qui représentent les points d'intersection du regard et de la surface complexe de la lentille pour une vision à l'infini et pour une vision de lecture. Pour une surface de lentille, l'addition surfacique $Add_{surf}$ peut s'exprimer comme la variation de sphère moyenne entre le point L de la zone de vision de loin et le point P de la zone de vision de près. L'addition surfacique ou optique correspond alors généralement à l'addition prescrite dans le cas usuel où la lentille comprend une surface complexe et une surface sphérique ou torique.

Dans une même famille de lentilles, l'addition varie d'une lentille à l'autre de la famille entre une valeur d'addition minimale et une valeur d'addition maximale. Habituellement, les valeurs minimale et maximale d'addition sont respectivement de 0,75 dioptrie et 3,5 dioptries, et l'addition varie de 0,25 dioptrie en 0,25 dioptrie d'une lentille à l'autre de la famille.

Dans une famille de lentille, des lentilles de même addition peuvent différer habituellement en fonction de l'amétropie, en un point de référence par la valeur de la sphère moyenne, appelée aussi base, mesurée sur la face opposée à l'oeil. On peut par exemple choisir de mesurer la base au point L de référence pour la vision de loin.

Pour des lentilles multifocales progressives, on définit ainsi par le choix d'un couple (addition, base) un ensemble ou jeu de faces multifocales complexes. Habituellement, on peut ainsi définir 5 valeurs de bases et 12 valeurs d'additions, soit soixante faces multifocales. Pour chaque couple (addition, base), une lentille communément appelée « semi-finie » dont l'addition est apportée par la surface complexe par la variation de courbure entre la zone de vision de loin et la zone de vision de près, peut être réalisée. Une telle lentille présente suffisamment de matière pour que le fabricant puisse y tailler la face opposée à la surface complexe qui permet d'obtenir la lentille de prescription souhaitée.

La prescription en matière ophtalmique peut comprendre en plus de la prescription de puissance une prescription d'astigmatisme. Une telle prescription est formée d'une valeur d'axe (en degrés) et d'une valeur d'amplitude (en dioptries). La valeur d'amplitude représente la différence entre les puissances minimales et maximales dans une direction donnée qui permettent de corriger le défaut visuel d'un porteur. Selon la convention choisie, l'axe représente l'orientation d'une des deux puissances par rapport à un axe de référence et dans un sens de rotation convenu. En pratique, la convention TABO est utilisée. Dans cette convention, l'axe de référence est horizontal et le sens de rotation est le sens trigonométrique direct pour chaque oeil, lorsque l'on regarde le porteur. Une valeur d'axe de +45° représente donc un axe orienté obliquement, qui lorsque l'on regarde le porteur, s'étend du quadrant situé en haut à droite jusqu'au quadrant situé en bas à gauche. Une telle prescription d'astigmatisme est mesurée sur le porteur regardant en vision de loin. On utilise le terme astigmatisme pour désigner le couple (amplitude, angle); bien qu'il s'agisse d'un abus de langage, on utilise aussi parfois ce terme pour désigner l'amplitude de l'astigmatisme. Le contexte permet à l'homme du métier de comprendre quelle acception est entendue. Il est aussi connu de l'homme du métier que la prescription en puissance et astigmatisme d'un porteur sont usuellement désignés et notés sous les termes de sphère, de cylindre et d'axe. Les lentilles ophtalmiques corrigeant la prescription d'astigmatisme d'un porteur peuvent être constituées de surfaces sphéro-cylindriques.

Par ailleurs, les lois de l'optique des tracés de rayons entraînent l'apparition de défauts optiques quand les rayons lumineux s'écartent de l'axe central de toute lentille. Ces défauts connus qui comprennent entre autres un défaut de puissance et un défaut d'astigmatisme peuvent être appelés de façon générique défauts d'oblicité des rayons. L'homme de l'art sait compenser ces défauts comme l'illustrent les documents EP-A-0 990 939, US-A-5 270 746 (EP-A-0 461 624) et WO-A-98 12590.

Les lentilles ophtalmiques multifocales, quel que soit le type auquel elles appartiennent, présentent inévitablement des aberrations optiques (astigmatisme résultant, défaut de puissance, déviations prismatiques ...) qui impliquent une adaptation plus ou moins longue et affectent le confort de vision, en vision statique comme en vision dynamique. On entend par le terme de vision dynamique la vision des objets se déplaçant dans le champ de vision, par mouvement propre ou par déplacement du porteur des lentilles.

Il existe un besoin pour une lentille multifocale progressive permettant de remédier aux inconvénients précédemment évoqués et notamment d'améliorer davantage le confort du porteur.

A cet effet, l'invention propose une lentille ophtalmique multifocale progressive comprenant une surface complexe présentant en tout point une valeur de sphère moyenne et une valeur de cylindre, telle que définie dans la revendication 1.

D'autres caractéristiques et avantages de l'invention apparaîtront à la lecture de la description détaillée qui suit des modes de réalisation de l'invention, donnés à titre d'exemple uniquement et en référence aux dessins qui montrent :

- figures 1 à 3, des représentations schématiques d'un système optique oeil et lentille ;
- figures 4 à 6, des caractérisations en terme surfacique d'un exemple de lentille ;
- figures 7 à 9, des caractérisations en terme surfacique d'un exemple de lentille ;
- figures 10 à 12, des caractérisations en terme surfacique d'un exemple de lentille ;
- figures 13 à 15, des caractérisations en terme optique d'un exemple de lentille ;
- figures 16 à 18, des caractérisations en terme optique d'un exemple de lentille ;
- figure 19 à 21, des caractérisations en terme optique d'un exemple de lentille.

Il est proposé une lentille multifocale progressive présentant des caractéristiques particulières. Une telle lentille permet d'obtenir une transition adoucie entre la zone de vision de loin et la zone de vision intermédiaire.

Il est proposé de définir les caractéristiques des lentilles en termes de sphère moyenne et de cylindre. Ainsi, de façon connue en soi, en tout point d'une surface asphérique, une sphère moyenne SPH peut être définie par la formule suivante:

$$ SPH = \frac{n-1}{2} \left( \frac{1}{R_1} + \frac{1}{R_2} \right) $$

où $R_1$ et $R_2$ sont les rayons de courbure maximal et minimal exprimés en mètres, et n l'indice du matériau constituant la lentille.

Un cylindre CYL peut aussi être défini par la formule:

$$CYL = \frac{n-1}{2} \left| \frac{1}{R_1} - \frac{1}{R_2} \right|$$

Les caractéristiques de la face complexe de la lentille peuvent être exprimées à l'aide de la sphère moyenne et du cylindre.

Par ailleurs, une lentille multifocale progressive peut aussi être définie par des caractéristiques optiques prenant en considération la situation du porteur des lentilles.

Dans la suite de la description, on fait référence à des termes tels que « haut », « bas », « horizontal », « vertical », « au-dessus », « en dessous », ou encore à d'autres termes indiquant des positions relatives. Il est entendu que ces termes sont à comprendre dans les conditions du porté de la lentille et qu'ils sont à prendre en référence par rapport au point de référence prisme $P_{PRP}$ lorsqu'il s'agit d'une surface ou par rapport à la croix de montage lorsqu'il s'agit de la lentille. Le point de référence prisme $P_{PRP}$ et la croix de montage sont définis plus bas.

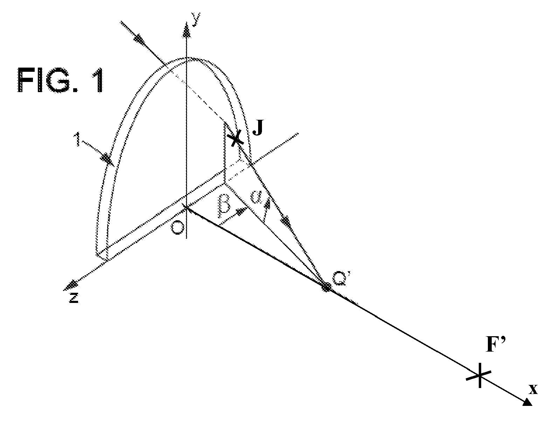

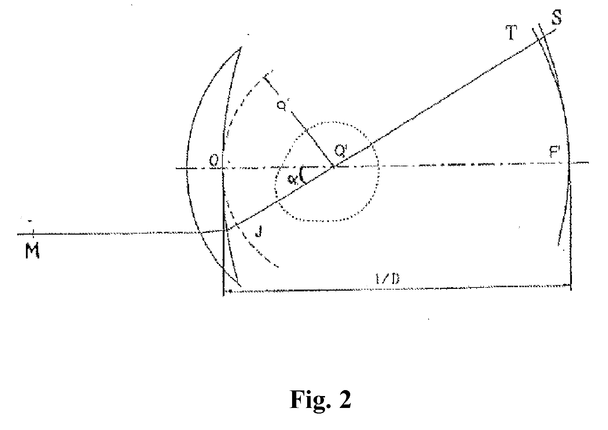

Les figures 1 à 2 montrent des schémas de systèmes optiques oeil et lentille, permettant d'illustrer les définitions utilisées dans la description. Plus précisément, la figure 1 représente un schéma d'une vue en perspective d'un tel système illustrant les paramètres $\alpha$ et $\beta$ utilisés pour définir une direction de regard. La figure 2 est une vue dans un plan vertical parallèle à un axe antéropostérieur de la tête du porteur et passant par la centre de rotation de l'oeil dans un cas où le paramètre $\beta$ vaut 0.

On appelle Q' le centre de rotation de l'oeil; l'axe Q'F', représenté sur la figure 2 en traits mixtes, est l'axe horizontal passant par le centre de rotation de l'oeil et s'étendant devant le porteur - autrement dit l'axe Q'F' correspond à la direction primaire du regard. Cet axe coupe la surface complexe de la lentille en un point appelé croix de montage, qui est matérialisé sur les lentilles pour permettre le positionnement des lentilles par un opticien. On définit le point O, point d'intersection de la surface arrière de la lentille et de l'axe Q'F'. On définit une sphère des sommets, de centre Q', et de rayon q', qui est tangente à la surface arrière de la lentille en un point de l'axe horizontal. A titre d'exemple, une valeur du rayon q' de 25,5 mm correspond à une valeur courante et fournit des résultats satisfaisants lors du porté des lentilles.

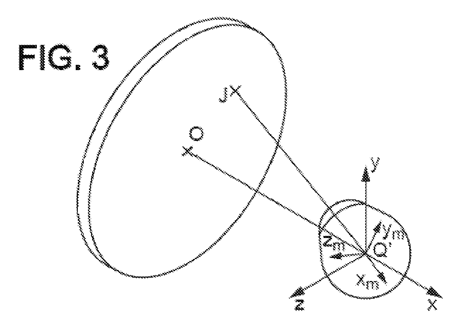

Une direction donnée du regard - représentée en traits pleins sur la figure 3 - correspond à une position de l'oeil en rotation autour de Q' et à un point J de la sphère des sommets; l'angle P est l'angle formé entre l'axe Q'F' et la projection de la droite Q'J sur le plan horizontal contenant l'axe Q'F'; cet angle apparaît sur le schéma de la figure 1. L'angle $\alpha$ est l'angle formé entre l'axe Q'J et la projection de la droite Q'J sur le plan horizontal contenant l'axe Q'F' ; cet angle apparaît sur les schémas des figures 1 et 2. Une direction donnée du regard correspond donc à un point J de la sphère des sommets ou à un couple $(\alpha, \beta)$. Plus la valeur de l'angle d'abaissement du regard $\alpha$ est positive, plus le regard s'abaisse et plus la valeur est négative, plus le regard se lève.

L'image d'un point de l'espace objet, dans une direction du regard, et à une distance objet donnée, se forme entre deux points S et T correspondant à des distances focales minimale et maximale, qui seraient des distances focales sagittale et tangentielle dans le cas de surfaces de révolution. Sur l'axe optique, l'image d'un point de l'espace objet à l'infini se forme au point F'. La distance D est la focale du système oeil-lentille.

On appelle ergorama une fonction associant à chaque direction du regard la distance habituelle du point objet. Typiquement, en vision de loin suivant la direction primaire du regard, le point objet est à l'infini. En vision de près, suivant une direction correspondant sensiblement à un angle $\alpha$ de l'ordre de 35° et à un angle P en valeur absolue de l'ordre de 5° vers le côté nasal, la distance objet est de l'ordre de 30 à 50 cm. Pour plus de détails sur une définition possible d'un ergorama, on pourra consulter FR-A-2 753 805 (US-A-6 318 859). Ce document décrit un ergorama, sa définition et son procédé de modélisation. Un ergorama particulier consiste à ne prendre que des points à l'infini. Pour le procédé de l'invention, on peut considérer des points à l'infini ou non. L'ergorama peut aussi être fonction de l'amétropie du porteur.

A l'aide de ces éléments, on peut définir une puissance et un astigmatisme, dans chaque direction du regard. Pour une direction du regard $(\alpha, \beta)$, on considère un point M objet à une distance objet donnée par l'ergorama. Dans l'espace objet, on définit, pour le point M sur le rayon lumineux correspondant, une proximité objet ProxO comme l'inverse de la distance MJ entre le point M et le point J de la sphère des sommets:

$$ProxO = 1/MJ$$

Ceci permet un calcul de la proximité objet dans le cadre d'une approximation lentille mince en tout point de la sphère des sommets, qui est utilisée pour la détermination de l'ergorama. Pour une lentille réelle, on peut à l'aide d'un programme de tracé de rayons considérer la proximité objet comme l'inverse de la distance entre le point objet et la surface avant de la lentille, sur le rayon correspondant.

Toujours pour la même direction du regard ($\alpha$,$\beta$), l'image d'un point M ayant une proximité objet donnée se forme entre deux points S et T correspondant respectivement à des distances focales minimale et maximale (qui seraient des distances focales sagittale et tangentielle dans le cas de surfaces de révolution). On appelle proximité image du point M, la quantité ProxI :

$$\Pr oxI = \frac{1}{2}\left( \frac{1}{JT} + \frac{1}{JS} \right)$$

Par analogie avec le cas de la lentille mince, on définit ainsi, dans une direction donnée du regard et pour une proximité objet donnée, i.e. pour un point de l'espace objet sur le rayon lumineux correspondant, une puissance optique Pui comme la somme de la proximité image et de la proximité objet.

$$Pui = \Pr oxO + \Pr oxI$$

Avec les mêmes notations, on définit dans chaque direction du regard et pour une proximité objet donnée, un astigmatisme Ast comme

$$Ast = \left| \frac{1}{JT} - \frac{1}{JS} \right|$$

Cette définition correspond à l'astigmatisme du faisceau de rayons créé par la lentille. On remarque que la définition fournit, dans la direction primaire du regard, la valeur classique de l'astigmatisme. L'angle de l'astigmatisme communément appelé axe est l'angle $\gamma$. L'angle $\gamma$ est mesuré dans le repère {Q', $x_m$, $y_m$, $z_m$} lié à l'oeil. Il correspond à l'angle avec lequel se forme l'image S ou T en fonction de la convention utilisée par rapport à la direction $z_m$ dans le plan (Q', $z_m$, $y_m$).

On obtient ainsi des définitions possibles de la puissance optique et de l'astigmatisme de la lentille, dans les conditions du porté, qui peuvent être calculés comme expliqué dans la publication de B. Bourdoncle et autres, «Ray tracing through progressive ophtalmic lenses », 1990 International Lens Design Conference, D.T. Moore ed., Proc. Soc. Photo. Opt. Instrum. Eng. On entend par conditions de port standard la position de la lentille par rapport à l'oeil d'un porteur moyen, définie notamment par un angle pantoscopique de -8°, une distance lentille-oeil de 12 mm, le galbe de 0°. On pourrait aussi utiliser d'autres conditions. On peut calculer les paramètres de port à l'aide d'un programme de tracé de rayons, pour une lentille donnée. La puissance optique et l'astigmatisme peuvent en outre être calculés de telle sorte que la prescription soit atteinte au niveau du point de référence pour la vision de loin soit pour un porteur portant ses lunettes dans les conditions du porté soit telle que mesurée par un frontofocomètre.

La figure 3 représente une vue en perspective dans une configuration où les paramètres $\alpha$ et $\beta$ sont non nuls. Il est ainsi mis en évidence l'effet de la rotation de l'oeil en montrant un repère {x, y, z} fixe et un repère {$x_m$, $y_m$, $z_m$} lié à l'oeil. Le repère {x, y, z} a pour origine le point Q'. L'axe x est l'axe Q'O et est orienté de la lentille vers l'oeil. L'axe y est vertical et orienté vers le haut. L'axe z est tel que le repère {x, y, z} soit orthonormé direct. Le repère {$x_m$, $y_m$, $z_m$} est lié à l'oeil et a pour centre le point Q'. L'axe $x_m$ correspond à la direction JQ' du regard. Ainsi, pour la direction primaire du regard, les deux repères {x, y, z} et {$x_m$, $y_m$, $z_m$} coïncident. Il est ainsi connu que les propriétés d'une lentille finie peuvent être caractérisées de plusieurs manières et notamment surfacique et optique. Une caractérisation surfacique est ainsi équivalente à une caractérisation optique. Dans le cas d'une lentille semi-finie, seule une caractérisation en surfacique peut être utilisée étant entendu qu'une caractérisation en optique suppose que la lentille ait été usinée à la prescription d'un porteur. Au contraire, dans le cas d'une lentille ophtalmique, la caractérisation peut être de type surfacique ou optique, les deux caractérisations permettant de décrire le même objet de deux points de vue différents.

Les grandeurs en surfacique s'expriment par rapport à des points. Les points sont situés à l'aide d'ordonnées ou d'abscisses dans un repère dont l'origine est généralement le point de référence prisme $P_{PRP}$. Le constructeur de la lentille est tenu de marquer le point de référence prisme afin que tout opticien puisse déterminer les valeurs de prisme de la lentille. Le prisme mesuré en ce point est alors la résultante du prisme prescrit et du prisme utilisé pour l'usinage. Le point de référence prisme correspond généralement au milieu de micro-gravures réalisées sur la lentille. Le constructeur de la lentille est également tenu de marquer de telles micro-gravures dans cette situation. Les grandeurs en optique s'expriment pour des directions de regard. Les directions de regard sont usuellement repérées par leur abaissement et leur azimut dans un repère dont l'origine est le centre de rotation de l'oeil. Lorsque la lentille est montée devant l'oeil, la croix de montage est placée devant la pupille de l'oeil pour une position primaire du regard. On entend par position primaire du regard, un porteur regardant droit devant. Dans le repère choisi, la croix de montage correspond alors à un abaissement de 0° et un azimut de 0°.

Sur les lentilles de la demanderesse, la direction de regard passant par la croix de montage est située 8° au dessus de la direction passant par le point de référence prisme; ou, dans le cas d'une caractérisation surfacique de la lentille, 4 mm au dessus du centre géométrique (0,0) de la lentille. D'autres positions de la croix de montage peuvent cependant être envisagées pourvu qu'elles correspondent à la position primaire du regard précédemment définie. En outre, il peut être remarqué lorsque le point de référence prisme correspond au milieu de micro-gravures réalisées sur la lentille, la connaissance des micro-gravures permet de repérer à la fois le point de référence prisme et la croix de montage.

Nous allons étudier la surface permettant d'obtenir un meilleur confort pour le porteur dans une partie sur la caractérisation surfacique. Puis, nous étudierons comment s'expriment en termes optiques les propriétés surfaciques pour une lentille comportant la surface dans une partie caractérisation optique.

Caractérisation surfacique

Il est considéré une lentille ophtalmique multifocale progressive comprenant une surface asphérique présentant en tout point une valeur de sphère moyenne et une valeur de cylindre tel que défini plus haut. La surface comprend une zone de vision de loin comportant un point de référence pour la vision de loin et une zone de vision de près comportant un point de référence pour la vision de près. La surface comprend également une addition surfacique $Add_{surf}$ définie comme la différence de sphère moyenne entre le point de référence pour la vision de près et le point de référence pour la vision de loin, et une zone de vision intermédiaire située entre la zone de vision de loin et la zone de vision de près. La surface comporte une méridienne principale de progression traversant les trois zones et séparant la surface en une zone temporale et une zone nasale. Une portion de la méridienne traversant la zone de vision de loin définit un axe vertical. La lentille comporte en outre une croix de montage $C_M$ et un point de référence prisme $P_{PRP}$. Le point de référence prisme $P_{PRP}$ définit avec l'axe vertical de la méridienne et l'axe horizontal reliant les micro-gravures un repère. Le repère permet de définir chacun des points de la lentille par une ordonnée relative à l'axe vertical et une abscisse relative à l'axe horizontal. Le point de référence prisme a une abscisse et une ordonnée nulles. Comme expliqué plus haut, la lentille peut être une lentille finie ou une lentille semi-finie.

La lentille remplit une première condition surfacique dite « condition surfacique 1 ». Selon la « condition surfacique 1 », la lentille présente une longueur de progression inférieure à 14,5 mm. La longueur de progression est définie comme la différence d'ordonnées entre l'ordonnée de la croix de montage et l'ordonnée du point de la méridienne où la variation de sphère moyenne par rapport à la valeur de la sphère moyenne au point de référence pour la vision de loin atteint 85% de l'addition surfacique. Cela permet d'améliorer le confort du porteur par rapport à une stratégie oeil-tête verticale, l'oeil ayant moins à se déplacer dans la direction verticale pour obtenir la correction adaptée à sa vision de près. Un tel effet est encore accru si la lentille remplit une « condition surfacique 1bis », c'est-à-dire si la lentille présente une longueur de progression inférieure à 13,5 mm.

La lentille remplit aussi une deuxième condition surfacique dite « condition surfacique 2 ». On définit sur la lentille un disque regroupant l'ensemble des points de la lentille ayant la même abscisse et la même ordonnée que des points situés à l'intérieur d'un cercle dans le plan du repère de diamètre 50 millimètres et centré sur le point de référence prisme $P_{PRP}$. On définit en outre un premier point $N_{CmaxN}$ spécifique ayant une valeur de cylindre égale à la valeur de cylindre maximale pour l'ensemble des points de la lentille situés dans la zone nasale et dans le disque. On définit en outre un deuxième point $T_{CmaxT}$ spécifique ayant une valeur de cylindre égale à la valeur de cylindre maximale pour l'ensemble des points de la lentille situés dans la zone temporale et dans le disque. On entend par le fait qu'une lentille remplisse la « condition surfacique 2 » le fait qu'une lentille comporte un premier rapport entre, la pente maximale de cylindre pour les points de la lentille ayant la même abscisse et la même ordonnée que les points situés sur les segments reliant la croix de montage $C_M$ aux premier et deuxième points spécifiques $N_{CmaxN}$ et $T_{CmaxT}$ d'une part, et l'addition surfacique $Add_{SURF}$ d'autre part, inférieur à 0,095 par millimètre. Ce premier rapport est noté par la suite Rsurfacique2. Une telle condition contribue à limiter la variation de pente du cylindre en bordure de la zone de vision de loin, ce qui améliore la vision dynamique tout en facilitant la transition de la zone de vision de loin à la zone de vision intermédiaire. Le confort du porteur s'en trouve augmenté. Un tel effet est encore accru si la lentille remplit une « condition surfacique 2bis » c'est-à-dire si la lentille présent un premier rapport Rsurfacique2 inférieur à 0,090 par millimètre.

La lentille remplit en outre une troisième condition dite « condition surfacique 3 ». Selon la « condition surfacique 3», la lentille présente un deuxième rapport entre, la valeur maximale de cylindre des premier et deuxième points spécifiques $N_{CmaxN}$ et $T_{CmaxT}$ d'une part, et l'addition d'autre part, inférieur ou égal à 0,85. Ce premier rapport est noté par la suite Rsurfacique3. Cela permet de contrôler le cylindre sur le disque regroupant l'ensemble des points de la lentille ayant la même abscisse et la même ordonnée que des points situés à l'intérieur d'un cercle dans le plan du repère de diamètre 50 millimètres et centré sur le point de référence prisme $P_{PRP}$. Les aberrations et notamment l'astigmatisme résultant pour l'ensemble des points du disque sont donc réduites. La vision du porteur sur ce disque est donc améliorée. Il en résulte un meilleur confort pour le porteur. Cet effet est encore accru si la lentille remplit une « condition surfacique 3bis » c'est-à-dire si la lentille présente un deuxième rapport Rsurfacique3 inférieur ou égal à 0,75.

La lentille décrite remplit donc les conditions surfaciques 1, 2 et 3 telles que définies plus haut. Une telle combinaison permet que la lentille offre une transition adoucie entre la zone de vision de loin et la zone de vision intermédiaire sans dégrader ses performances. Le confort du porteur s'en trouve amélioré. Notamment, l'adaptation aux lentilles est plus facile dans le cas d'une lentille présentant une transition adoucie entre la zone de vision de loin et la zone de vision intermédiaire.

La lentille remplit également une quatrième condition surfacique dite « condition surfacique 4 ». Selon la « condition surfacique 4 », la lentille présente une différence de rapport notée Dsurfacique4 entre la valeur de cylindre et l'addition surfacique $Add_{surf}$ inférieure à 0,2 en valeur absolue pour tout couple de points de la lentille symétriques par rapport à la croix de montage $C_M$ et ayant la même ordonnée que la croix de montage $C_M$, l'abscisse de chaque point étant inférieure à 20 millimètres en valeur absolue. Cela permet d'assurer une certaine symétrie de la répartition du cylindre à la hauteur de la croix de montage. Cela permet ainsi d'améliorer la vision binoculaire pour le porteur en vision de loin. Une telle condition permet d'assurer ainsi un confort optimal au porteur en vision de loin. En effet, lorsque le porteur regarde au loin en décalant légèrement les yeux horizontalement, il regardera à travers la partie nasale d'une lentille avec un oeil et à travers la partie temporale de l'autre lentille avec l'autre oeil. Or, un bon équilibre binoculaire est obtenu si les qualités perçues sont sensiblement les même pour chacun des yeux. Une telle situation correspond à des aberrations optiques perçues sensiblement identiques pour les deux yeux. En garantissant que les valeurs de cylindre normalisées à l'addition surfacique soient sensiblement symétriques de part et d'autre de la croix de montage, l'oeil gauche et l'oeil droit du porteur rencontrent sensiblement les mêmes défauts optiques. Un bon équilibre perceptif entre les deux yeux en vision de loin est ainsi assuré car la zone horizontale au niveau de la croix de montage est la plus sollicitée par un porteur fixant un point en vision de loin tout en décalant les yeux latéralement. Un tel effet est encore accru si la lentille remplit une « condition surfacique 4bis », c'est-à-dire si la lentille présente une différence de rapport entre la valeur de cylindre et l'addition surfacique inférieure à 0,1 en valeur absolue pour tout couple de points de la lentille symétriques par rapport à la croix de montage $C_M$ situés à la même ordonnée que la croix de montage $C_M$, l'abscisse de chaque point étant limitée à 20 millimètres en valeur absolue.

Une telle lentille remplissant les conditions surfaciques 1, 2, 3 et 4 telle que définie plus haut présente donc un confort amélioré par rapport à une lentille remplissant les conditions surfaciques 1, 2 et 3.

A titre d'illustration, trois lentilles numérotées de 1 à 3 peuvent être considérées. La lentille 1 présente une addition de 1,25 dioptrie, la lentille 2, une addition de 2,00 dioptries et la lentille 3, une addition de 2,75 dioptries. Selon les exemples 1 à 3, la surface complexe remplissant les conditions surfaciques 1, 2 et 3 est portée par la face avant de la lentille mais il est entendu que la surface complexe peut également être portée par la face arrière de la lentille.

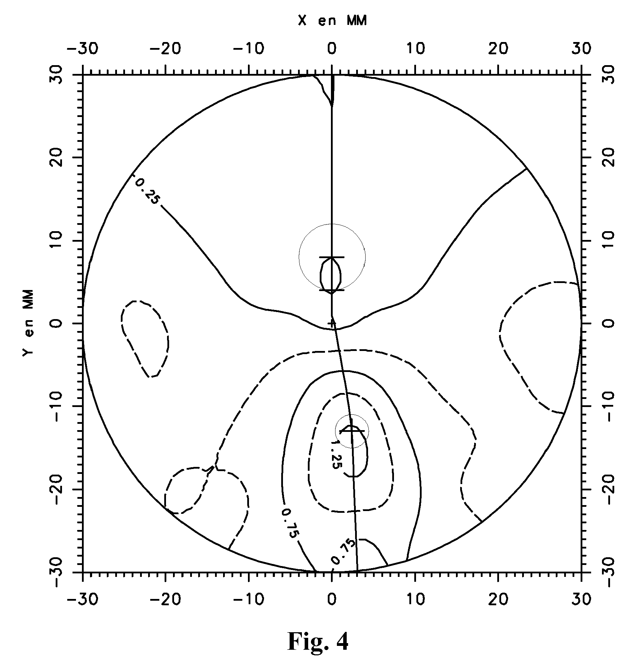

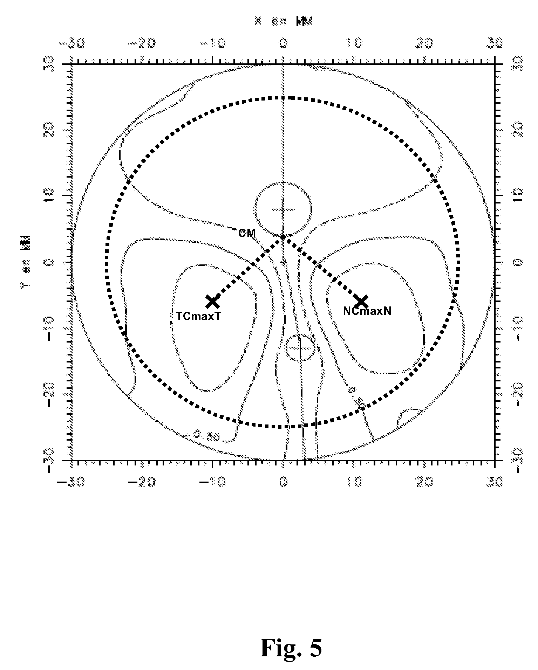

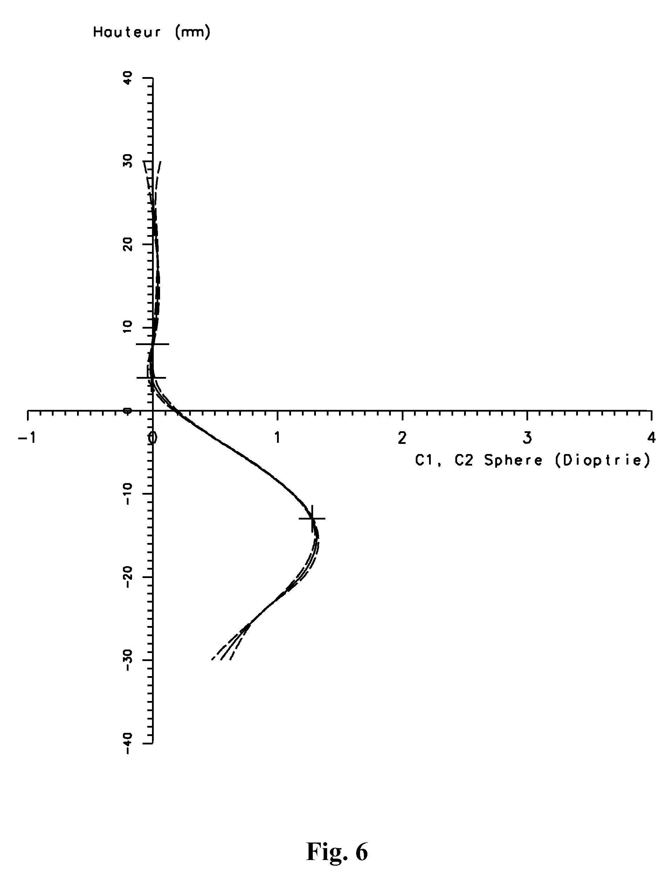

Les figures 4 à 6 montrent des représentations des caractéristiques surfaciques de la surface avant de la lentille 1. La figure 4 montre les lignes d'isosphère moyenne de la surface avant de la lentille ; les axes sont gradués en mm ; la figure 5 montre les lignes d'isocylindre, avec les mêmes axes. On appelle lignes d'isosphère les lignes constituées par les projections dans le plan tangent à la surface progressive en $P_{PRP}$ des points de la surface présentant une sphère moyenne de même valeur. De la même façon, on appelle lignes d'isocylindre les lignes constituées par la projection dans le plan précité des points de la surface présentant un cylindre de même valeur. La figure 6 montre la variation de sphère par rapport au point de référence pour la vision de loin selon la méridienne, avec la définition de sphère donnée plus haut. Le trait plein montre la variation de sphère moyenne par rapport au point de référence pour la vision de loin, et les traits interrompus la variation de la sphère minimale $(n-1)/R_1$ par rapport au point de référence pour la vision de loin et la variation de la sphère maximale $(n-1)/R_2$ par rapport au point de référence pour la vision de loin.

Sur la figure 5, le premier point spécifique $N_{CmaxN}$ et deuxième point spécifique $T_{CmaxT}$ sont repérés. On a aussi représenté sur la figure 5 un cercle de diamètre 50 millimètres centré sur le point de référence prisme ainsi que des segments reliant la croix de montage CM aux premier et deuxième points spécifiques $N_{CmaxN}$ et $T_{CmaxT}$.

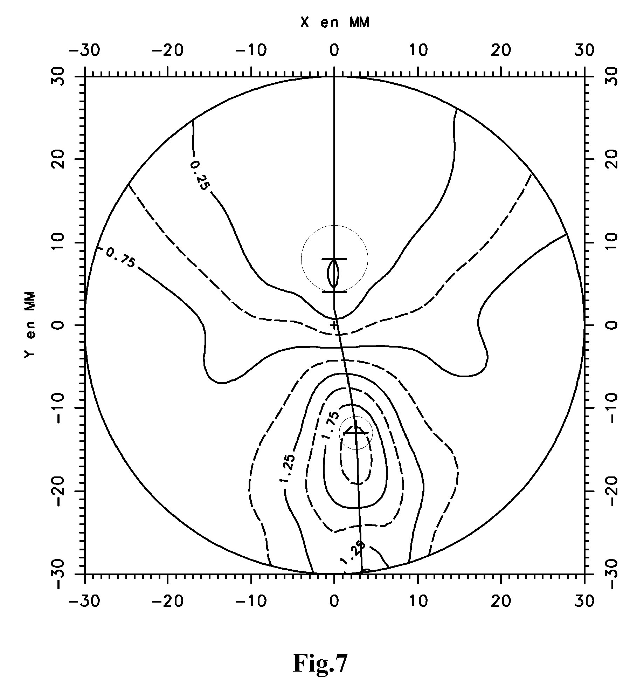

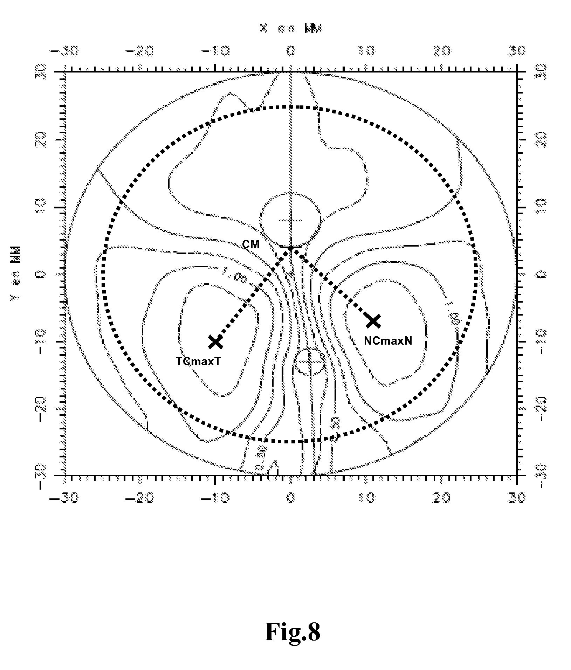

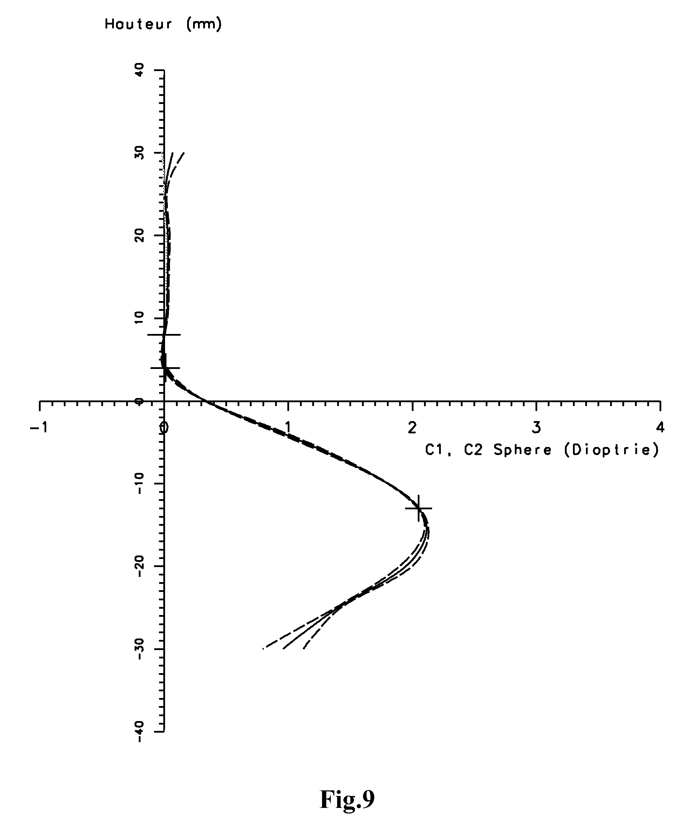

Les figures 7 à 9 montrent des représentations graphiques des caractéristiques surfaciques de la surface avant de la lentille 2, avec les mêmes conventions que les figures 4 à 6. La figure 8 porte les mêmes cercles et segments que ceux représentés sur la figure 5.

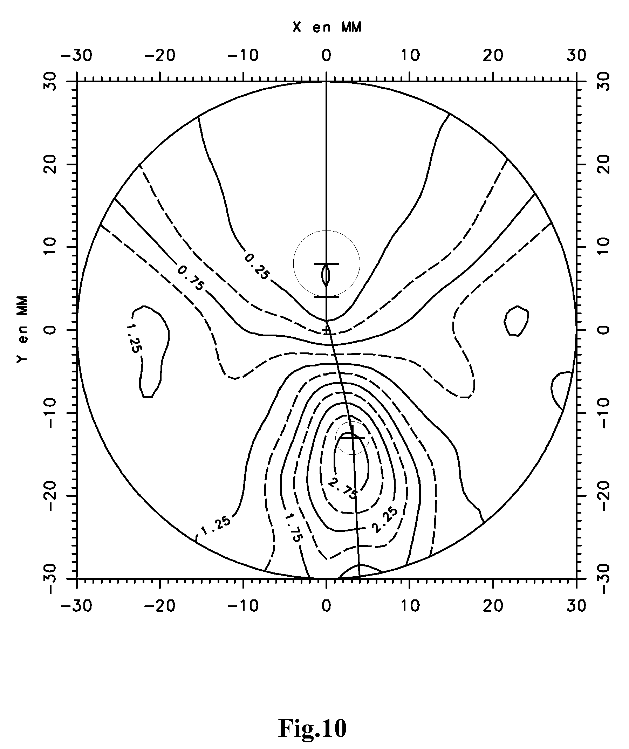

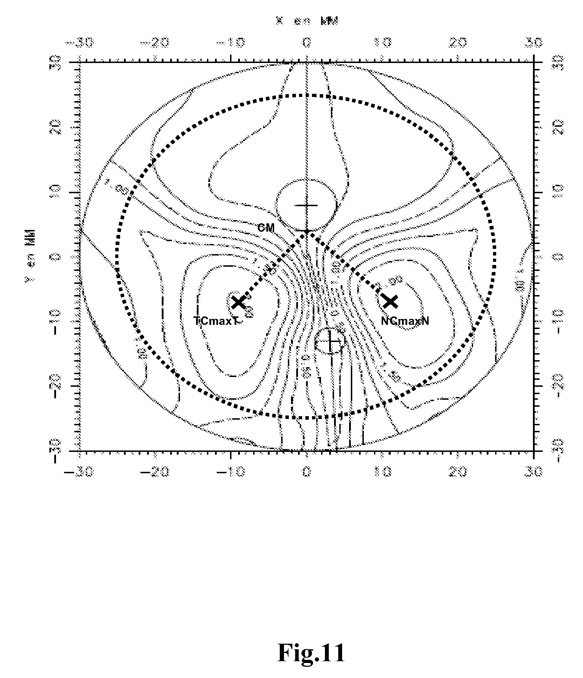

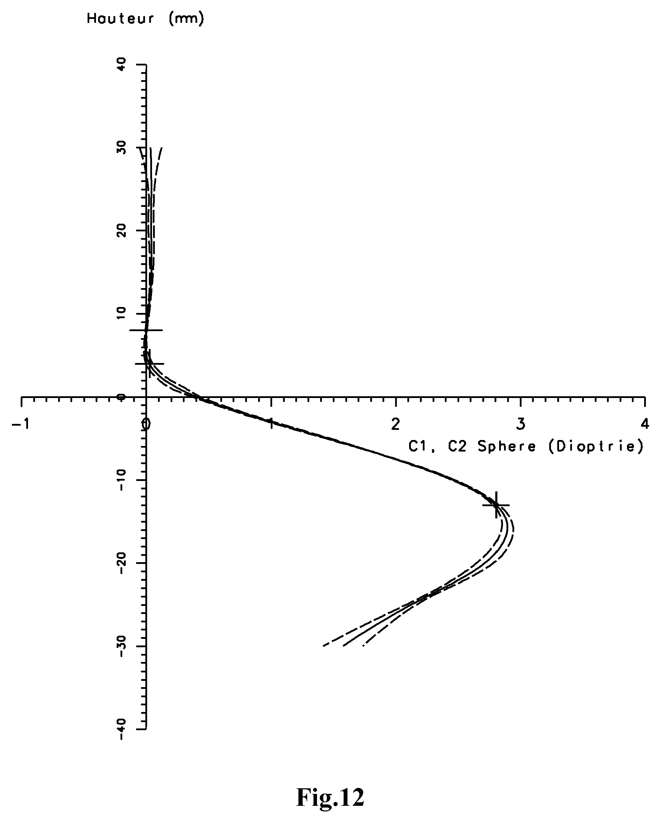

Les figures 10 à 12 montrent des représentations graphiques des caractéristiques surfaciques de la surface avant de la lentille 3, avec les mêmes conventions que les figures 4 à 6. La figure 11 porte les mêmes cercles et segments que ceux représentés sur les figures 5 et 8.

Le tableau 1 présente les valeurs des longueurs de progression pour les trois exemples de lentilles.

*Tableau 1 : Valeur de la longueurs de progression pour trois exemples de lentilles.*

| Exemple de lentille considéré | Type de lentille | Addition | Longueur de progression (mm) |
|---|---|---|---|
| Exemple 1 | Lentille finie | 1,25 dioptrie | 13.48 |

(suite)

| Exemple de lentille considéré | Type de lentille | Addition | Longueur de progression (mm) |
|---|---|---|---|
| Exemple 2 | Lentille finie | 2,00 dioptries | 13.48 |
| Exemple 3 | Lentille finie | 2,75 dioptries | 13.52 |

Pour chacun des exemples 1 à 3, la longueur de progression est inférieure à 14,5 millimètres. La condition surfacique 1 est donc bien remplie par les lentilles des exemples considérés. De plus, les lentilles des exemples 1 et 2 présentent une longueur de progression inférieure à 13,5 millimètres ; elles respectent donc la condition surfacique lbis et apportent au porteur un confort amélioré pour l'accès à la vision de près.

En outre, les valeurs du premier rapport caractéristique Rsurfacique2 et du deuxième rapport caractéristique Rsurfacique3 sont données dans le tableau 2 pour les 3 exemples de lentilles.

*Tableau 2 : Rapports surfaciques Rsurfacique2 et Rsurfacique3 pour trois exemples de lentilles.*

| Exemple de lentille considéré | Type de lentille | Addition | Rsurfacique2 | Rsurfacique3 |
|---|---|---|---|---|
| Exemple 1 | Lentille finie | 1,25 dioptrie | 0,078/mm | 0.72 |
| Exemple 2 | Lentille finie | 2,00 dioptries | 0,085/mm | 0.68 |
| Exemple 3 | Lentille finie | 2,75 dioptries | 0,087/mm | 0.74 |

Pour chacun des exemples 1 à 3, le rapport Rsurfacique2 est inférieur à 0,095/mm. La condition surfacique 2 est donc bien remplie par les lentilles des exemples considérés.

En outre, le rapport Rsurfacique3 est inférieur à 0,85. La condition surfacique 3 est donc bien remplie par les lentilles des exemples considérés.

Les trois exemples de lentilles considérés remplissent donc la combinaison des conditions surfaciques 1, 2 et 3.

De plus, la lentille de l'exemple 1 présente un rapport Rsurfacique2 inférieur à 0,085/mm. Cela signifie que la lentille de l'exemple 1 remplit en outre la condition surfacique 2bis et présente un confort encore amélioré par rapport à une lentille dont la surface remplit les conditions surfaciques 1, 2 et 3.

Les lentilles des exemples 1, 2 et 3 présentent en outre un rapport Rsurfacique3 inférieur à 0,75. Cela signifie qu'elles remplissent également la condition surfacique 3bis et présentent un confort encore amélioré par rapport à une lentille dont la surface remplit les conditions surfaciques 1, 2 et 3.

En outre, la valeur Dsurfacique4 du maximum de la différence de rapport entre la valeur de cylindre et l'addition surfacique en valeur absolue pour tout couple de points de la lentille symétriques par rapport à la croix de montage et ayant la même ordonnée que la croix de montage et une abscisse inférieure à 20 millimètres en valeur absolue est donnée pour chacun des trois exemples de lentilles dans le tableau 3.

*Tableau 3 : Valeur Dsurfacique4 pour trois exemples de lentilles.*

| Exemple de lentille considéré | Type de lentille | Addition | Dsurfacique4 |
|---|---|---|---|
| Exemple 1 | Lentille finie | 1,25 dioptrie | 0.040 |
| Exemple 2 | Lentille finie | 2,00 dioptries | 0.045 |
| Exemple 3 | Lentille finie | 2,75 dioptries | 0.058 |

Pour chacun des exemples 1 à 3, la valeur Dsurfacique4 est inférieure à 0,2. Cela signifie que chacune des lentilles remplit la condition surfacique 4 et présente un confort encore amélioré par rapport à une lentille dont la surface remplit les conditions surfaciques 1, 2 et 3. De plus, les lentilles des exemples 1, 2 et 3 présentent une valeur Dsurfacique4 inférieure à 0,1 ; elles respectent donc aussi la condition surfacique 4bis et apportent au porteur un confort supplémentaire.

Caractérisation optique

Il est considéré une lentille ophtalmique multifocale progressive destinée à un porteur auquel une addition a été prescrite. La lentille présente pour chaque direction de regard, une puissance et un astigmatisme résultant pour des conditions de port standard, chaque direction de regard correspondant à un angle d'abaissement $\alpha$ et un angle d'azimut β tel que défini plus haut en référence à la position de l'oeil en rotation autour de son centre. La lentille présente une croix de montage $C_M$ correspondant à une direction primaire du regard ayant un angle d'abaissement du regard nul et un angle d'azimut nul. La lentille comprend une zone de vision de loin comportant un point de référence pour la vision de loin correspondant à une direction de regard de référence pour la vision de loin, une zone de vision de près comportant un point de référence pour la vision de près correspondant à une direction de regard de référence pour la vision de près. La lentille comporte en outre une zone de vision intermédiaire située entre la zone de vision de loin et la zone de vision de près et une méridienne principale de progression traversant les trois zones et séparant la lentille en une zone temporale et une zone nasale.

La lentille remplit une première condition dite « condition optique 1 ». Selon la « condition optique 1 », la lentille présente une longueur de progression inférieure à 29°. La condition optique 1 est donc l'expression en terme optique de la condition surfacique 1 qui est exprimée en terme surfacique. Lorsque la longueur de progression est considérée d'un point de vue optique, elle se définit comme la différence d'angle entre la direction primaire du regard et l'angle d'abaissement de regard passant par la méridienne et pour lequel la variation de puissance optique porteur par rapport à la valeur de puissance optique porteur sur le point de référence pour la vision de loin atteint 85 % de l'addition prescrite. Une telle définition est l'expression optique de la définition surfacique précédemment exposée en référence à la condition surfacique 1. Cela permet d'améliorer le confort du porteur par rapport à la stratégie oeil-tête verticale, l'oeil ayant moins à se déplacer dans la direction verticale pour obtenir la correction adaptée à sa vision de près. Un tel effet est encore accru si la lentille remplit une « condition optique 1bis », c'est-à-dire si la lentille présente une longueur de progression inférieure à 27°.

La lentille remplit une deuxième condition dite « condition optique 2 ». On définit une première direction spécifique $D_{AmaxN}$ dont l'astigmatisme résultant est une valeur d'astigmatisme résultant maximale pour l'ensemble des directions de regard passant par la zone nasale et par un disque angulaire de diamètre 100° centré sur la direction primaire du regard. Les directions de regard passant par ce disque présentent un angle d'abaissement et un angle d'azimut tels que $\sqrt{\alpha^2 + \beta^2} \leq 100°$.

Cette première direction spécifique $D_{AmaxN}$ correspond à un premier angle d'abaissement du regard noté $\alpha_1$ et un premier angle d'azimut noté $\beta_1$. On définit en outre une deuxième direction spécifique $D_{AmaxT}$ dont l'astigmatisme résultant est une valeur d'astigmatisme résultant maximale pour l'ensemble des directions de regard passant par la zone temporale et par le disque angulaire. Cette deuxième direction spécifique correspond à un deuxième angle d'abaissement du regard noté $\alpha_2$ et un deuxième angle d'azimut noté $\beta_2$. On entend par le fait qu'une lentille remplisse la « condition optique 2 » le fait que la lentille présente un premier rapport entre la pente maximale d'astigmatisme résultant et l'addition prescrite inférieur à 0,043 par degrés pour certaines directions de regard définies comme les directions passant par :

- la zone nasale et ayant un angle d'abaissement $\alpha$ et un angle d'azimut $\beta$ tels que la valeur absolue de l'angle d'azimut $\beta$ est inférieur à la valeur absolue du premier angle d'azimut $\beta_1$ en valeur absolue et tels que le produit entre le premier angle d'abaissement $\alpha_1$ et l'angle d'azimut $\beta$ est égal au produit entre le premier angle d'azimut $\beta_1$ et l'angle d'abaissement $\alpha$. Cela peut se traduire sous forme d'équation par une direction d'angle d'abaissement $\alpha$ et d'angle d'azimut $\beta$ passant par la zone nasale telle que :

$$\begin{cases} |\beta| \leq |\beta_1| \\ \beta\alpha_1 = \beta_1\alpha \end{cases} \quad (1)$$

- la zone temporale et ayant un angle d'abaissement $\alpha$ et un angle d'azimut $\beta$ tels que la valeur absolue de l'angle d'azimut $\beta$ est inférieur à la valeur absolue du deuxième angle d'azimut $\alpha_2$ et tels que le produit entre le deuxième angle d'abaissement $\alpha_2$ et l'angle d'azimut $\beta$ est égal au produit entre le deuxième angle d'azimut $\beta_2$ et l'angle d'abaissement $\alpha$. Cela peut se traduire sous forme d'équation par une direction d'angle d'abaissement $\alpha$ et d'angle d'azimut $\beta$ passant par la zone temporale telle que :

$$\begin{cases} |\beta| \leq |\beta_2| \\ \alpha_2\beta = \beta_2\alpha \end{cases} \quad (2)$$

Ce premier rapport sera désigné par la suite Roptique2. La condition optique 2 est donc l'expression en terme optique de la condition surfacique 2 qui est exprimée en terme surfacique. Une telle condition contribue à limiter la variation de pente d'astigmatisme résultant en bordure de la zone de vision de loin, ce qui améliore la vision dynamique tout en facilitant la transition de la zone de vision de loin à la zone de vision intermédiaire. Le confort du porteur s'en trouve augmenté. Un tel effet est encore accru si la lentille remplit une « condition optique 2bis », c'est-à-dire si la lentille présente un premier rapport Roptique3 inférieur ou égal à 0,038 par degrés.

La lentille remplit en outre une troisième condition optique 3. Selon la « condition optique 3 », la lentille présente un deuxième rapport entre la valeur maximale d'astigmatisme résultant pour l'ensemble des directions de regard passant par le disque d'une part et l'addition prescrite d'autre part inférieur ou égal à 1. Ce deuxième rapport est noté Roptique3. La condition optique 3 est donc l'expression en terme optique de la condition surfacique 3 qui est exprimée en terme surfacique. Cela permet de contrôler l'astigmatisme résultant sur le disque. Les aberrations et notamment l'astigmatisme résultant et le défaut de puissance dans ce disque sont donc réduites. La vision du porteur sur ce disque est donc améliorée. Il en résulte un meilleur confort pour le porteur. Un tel effet est encore accru si la lentille remplit une « condition optique 3bis », c'est-à-dire si la lentille présente un deuxième rapport Roptique3 inférieur ou égal à 0,85.

La lentille de l'invention remplit donc les conditions optiques 1, 2 et 3 telles que définies ci-dessus. Une telle combinaison permet que la lentille offre une transition adoucie entre la zone de vision de loin et la zone de vision intermédiaire sans dégrader ses performances. Le confort du porteur s'en trouve amélioré. Notamment, l'adaptation aux lentilles est plus facile dans le cas d'une lentille présentant une transition adoucie entre la zone de vision de loin et la zone de vision intermédiaire.

La lentille peut également remplir une quatrième condition dite « condition optique 4 ». Selon la « condition optique 4 », la lentille présente une différence de rapport noté Doptique4 entre la valeur d'astigmatisme résultant et l'addition prescrite inférieure à 0,3 en valeur absolue pour tout couple de directions de regard symétriques par rapport à la direction primaire du regard ayant un angle d'abaissement nul et un angle d'azimut inférieur à 52° en valeur absolue. On entend par astigmatisme résultant l'écart entre l'astigmatisme prescrit et l'astigmatisme produit par la lentille. La condition optique 4 est donc l'expression en terme optique de la condition surfacique 4 qui est exprimée en terme surfacique. Cela permet d'assurer une certaine symétrie de la répartition de l'astigmatisme résultant pour les directions de regards présentant un même abaissement de regard que la direction de regard passant par la croix de montage. Cela permet ainsi d'améliorer la vision binoculaire pour le porteur en vision de loin. Une telle condition permet d'assurer ainsi un confort optimal au porteur en vision de loin. En effet, lorsque le porteur regarde au loin en décalant légèrement les yeux horizontalement, il regardera à travers la partie nasale d'une lentille avec un oeil et à travers la partie temporale de l'autre lentille avec l'autre oeil. Or, un bon équilibre binoculaire est obtenu si les qualités perçues sont sensiblement les même pour chacun des yeux. Une telle situation correspond à des aberrations optiques perçues sensiblement identiques pour les deux yeux. En garantissant que les valeurs d'astigmatisme résultant normalisées à l'addition prescrite soient sensiblement symétriques de part et d'autre de la croix de montage, l'oeil gauche et l'oeil droit du porteur rencontrent sensiblement les mêmes défauts optiques. Un bon équilibre perceptif entre les deux yeux en vision de loin est ainsi assuré car la zone horizontale au niveau de la croix de montage est la plus sollicitée par un porteur fixant un point en vision de loin tout en décalant les yeux latéralement. Un tel effet est encore accru si la lentille remplit une « condition optique 4bis », c'est-à-dire si la lentille présente une différence de rapport entre la valeur d'astigmatisme résultant et l'addition prescrite inférieure à 0,1 en valeur absolue pour tout couple de directions de regard symétriques par rapport à la direction primaire du regard et ayant un angle d'abaissement nul et un angle d'azimut inférieur à 52° en valeur absolue.

Une telle lentille remplissant les conditions optiques 1, 2, 3 et 4 telle que définie plus haut présente donc un confort amélioré par rapport à une lentille remplissant les conditions optiques 1, 2 et 3.

A titre d'illustration, des lentilles 4, 5 et 6 sont étudiées. La lentille 4 présente une addition de 1,25 dioptrie, la lentille 5 une addition de 2,00 dioptries et la lentille 6 une addition de 2,75 dioptries (. Ces valeurs d'addition correspondent aux additions prescrites. Selon les exemples 4, 5 et 6, la surface complexe est répartie entre les deux faces mais il entendu que la surface complexe peut être portée uniquement par la face avant de la lentille ou par la face arrière de la lentille.

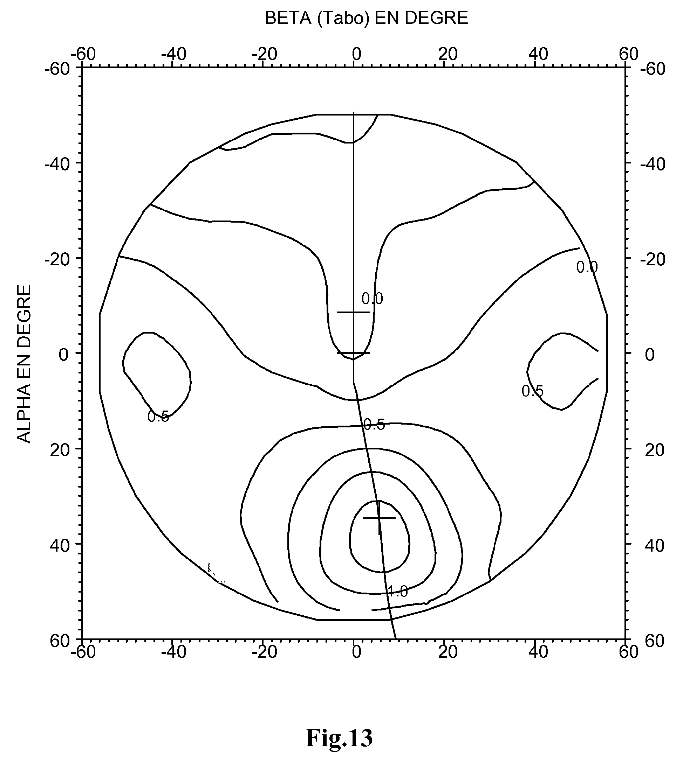

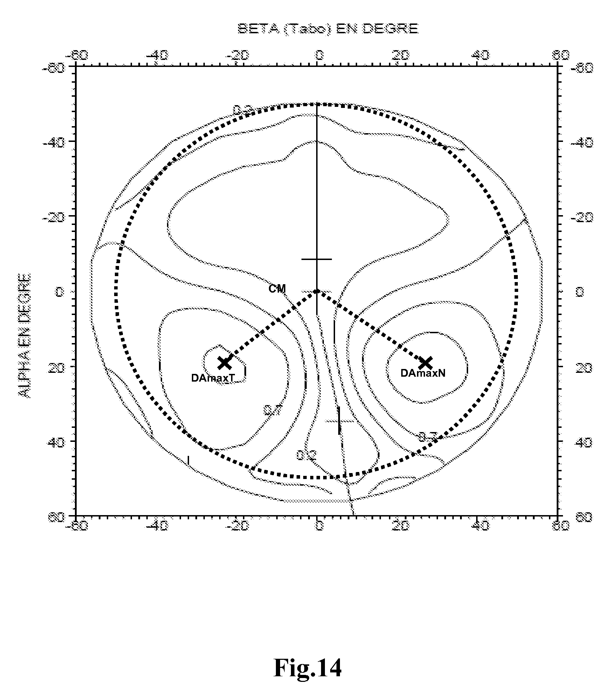

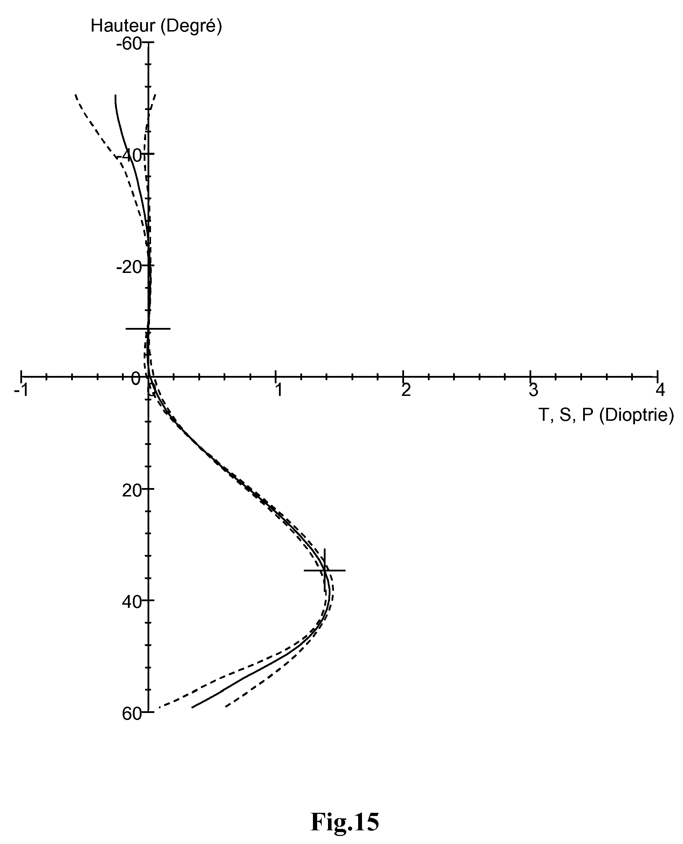

Les caractéristiques optiques présentées ensuite dans les figures 13 à 15 ont été obtenues par calcul. Les figures 13 à 15 montrent des représentations graphiques des caractéristiques optiques de la lentille 4. La figure 13 est une représentation graphique des lignes d'égale puissance, i.e. correspondant à des directions de regards ayant une valeur de puissance identique. Les axes des abscisses et des ordonnées donnent respectivement des angles $\beta$ et $\alpha$ tels que définis plus haut. La figure 13 permet ainsi de visualiser une carte du défaut de puissance. La figure 14 montre, avec les mêmes axes, les lignes d'égal astigmatisme résultant. La figure 14 est ainsi une représentation graphique de l'astigmatisme résultant. La figure 15 montre la puissance selon la méridienne, avec la définition de puissance donnée plus haut. Les abscisses sont graduées en dioptries, et les ordonnées donnent l'abaissement de la direction de regard ; le trait plein montre la puissance, et les traits interrompus les quantités 1/JT et 1/JS définies à la figure 2, pour des distances objets correspondant à un ergorama représentatif des distances des points objets dans chaque direction du regard et simulant un espace objet moyen. La figure 15 donne ainsi accès au défaut de puissance et à l'astigmatisme résultant selon la méridienne.

Sur la figure 14, les première $D_{AmaxN}$ et deuxième $D_{AmaxT}$ directions spécifiques sont repérées. On a aussi représenté sur la figure 14 un cercle de diamètre 100° centré sur la croix de montage ainsi que deux segments, un segment reliant la croix de montage à la première direction spécifique dans la zone nasale et un segment reliant la croix de montage à la deuxième direction spécifique dans la zone temporale.

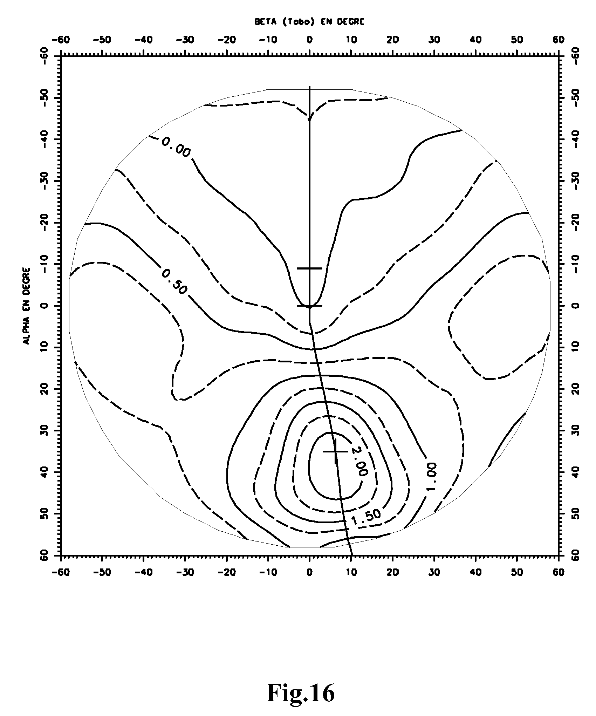

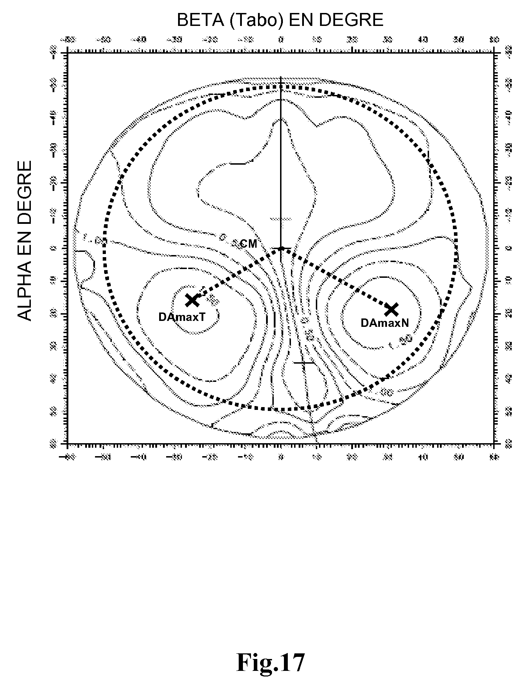

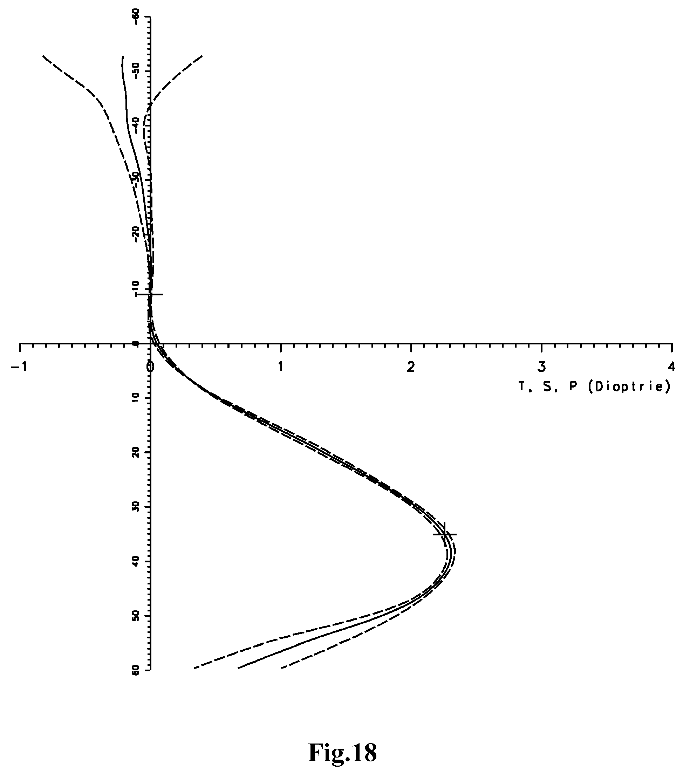

Les figures 16 à 18 montrent des représentations graphiques des caractéristiques optique de la lentille 5, avec les mêmes conventions que les figures 13 à 15. La figure 17 porte les mêmes cercles et segments que ceux représentés sur la figure 14.

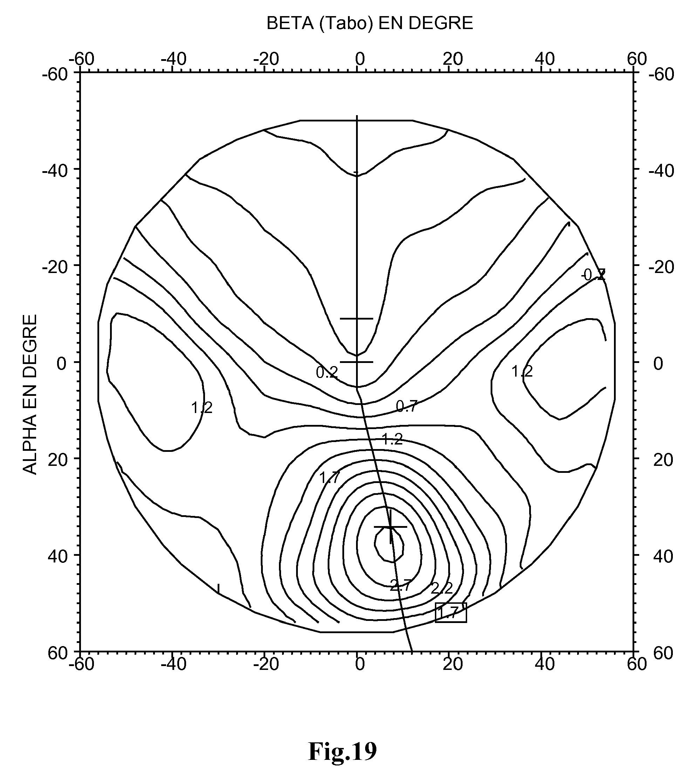

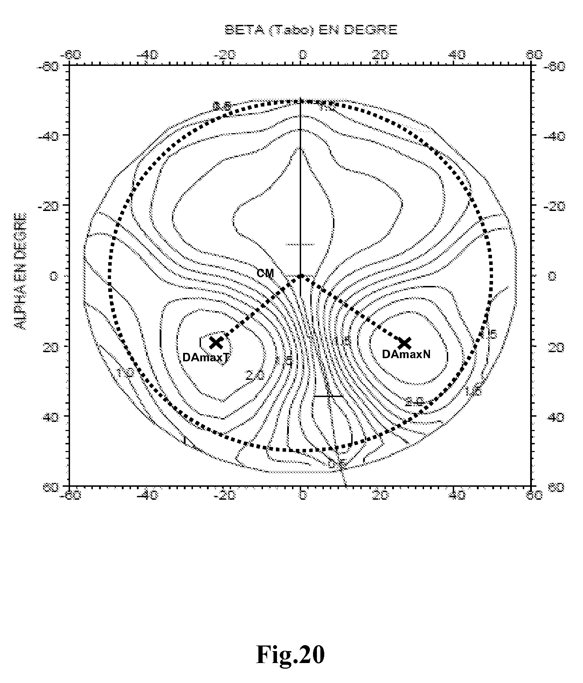

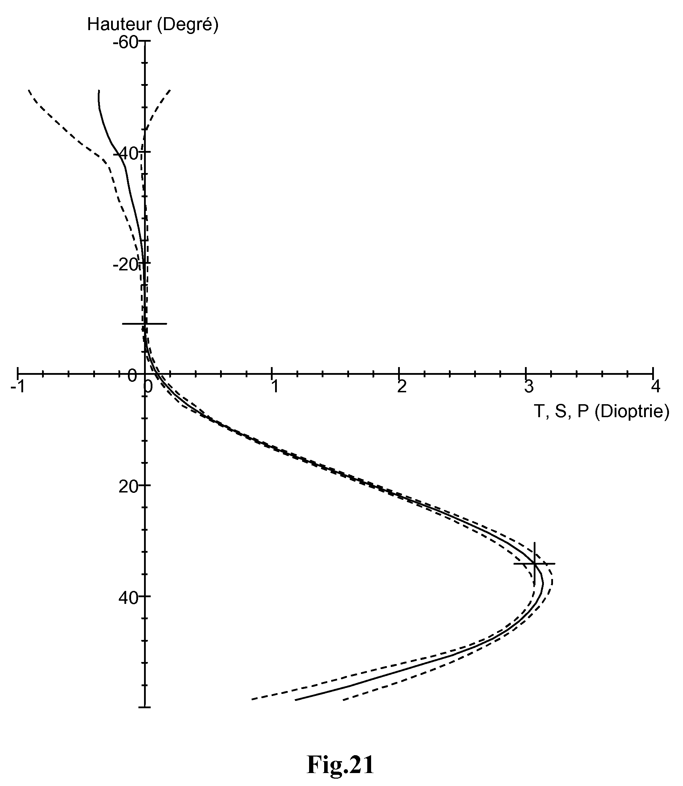

Les figures 19 à 21 montrent des représentations graphiques des caractéristiques optique de la lentille 6, avec les mêmes conventions que les figures 13 à 15. La figure 20 porte les mêmes cercles et segments que ceux représentés sur les figures 14 et 17.

Le tableau 4 présente les valeurs des longueurs de progression pour les trois exemples de lentilles.

*Tableau 4: Valeur de la langueur de progression pour trois exemples de lentilles.*

| Exemple de lentille considéré | Type de lentille | Addition | Longueur de progression (°) |
|---|---|---|---|
| Exemple 4 | Lentille finie | 1,25 dioptrie | 26.3 |
| Exemple 5 | Lentille finie | 2,00 dioptries | 25.8 |
| Exemple 6 | Lentille finie | 2,75 dioptries | 25.7 |

Pour chacun des exemples 4 à 6, la longueur de progression est inférieure à 29°. La condition optique 1 est donc bien remplie par les lentilles des exemples considérés. De plus, les lentilles des exemples 4 à 6 présentent une longueur de progression inférieure à 27° ; elles respectent donc la condition optique 1bis et apportent au porteur un confort amélioré pour l'accès à la vision de près.

En outre, les valeurs des rapports caractéristiques noté Roptique2 de la condition optique 2 et noté Roptique3 de la condition optique 3 sont données dans le tableau 5 pour les exemples de lentilles 4, 5 et 6.

*Tableau 5 : Rapports Roptique2 et Roptique3 pour trois exemples de lentilles.*

| Exemple de lentille considéré | Addition prescrite | Roptique2 | Roptique3 |
|---|---|---|---|
| Exemple 4 | 1,25 dioptrie | 0,04/° | 0.86 |
| Exemple 5 | 2,00 dioptries | 0,037/° | 0.82 |
| Exemple 6 | 2,75 dioptries | 0,043/° | 0.88 |

Pour chacun des exemples 4, 5 et 6, le rapport Roptique2 est inférieur à 0,043 par degré (0,043/°). La condition optique 2 est donc bien remplie par les lentilles des exemples considérés. Les lentilles considérées à titre d'exemple présentent donc une transition facilitée entre la zone de vision de loin et la zone de vision intermédiaire.

Le rapport Roptique3 est en outre inférieur à 1. La condition optique 3 est donc bien remplie par les lentilles des exemples considérés.

Les trois exemples de lentilles considérés remplissent donc la combinaison des conditions optiques 1, 2 et 3.

De plus, la lentille de l'exemple 5 présente un rapport Roptique2 inférieur à 0,038 par degrés. Cela signifie que la lentille de l'exemple 5 remplit en outre la condition optique 2bis et présente un confort encore amélioré par rapport à une lentille dont la surface remplit les conditions optiques 1, 2 et 3.

La lentille de l'exemple 5 présente en outre un rapport Roptique3 inférieur à 0,85. Cela signifie que la lentille de l'exemple 5 remplit également la condition optique 3bis et présente un confort encore amélioré par rapport à une lentille dont la surface remplit les conditions surfaciques 1, 2 et 3.

Le tableau 6 présente également la valeur, notée Doptique4, maximale de la différence de rapport entre la valeur d'astigmatisme résultant et l'addition prescrite en valeur absolue pour tout couple de directions de regard symétriques par rapport à la direction primaire du regard et ayant un angle d'abaissement nul et un angle d'azimut inférieur à 52° en valeur absolue pour chacune des trois exemples de lentilles.

*Tableau 6 : Valeur la valeur Doptique4 pour trois exemples de lentilles.*

| Exemple de lentille considéré | Type de lentille | Addition | Doptique4 |
|---|---|---|---|
| Exemple 4 | Lentille finie | 1,25 dioptrie | 0.059 |
| Exemple 5 | Lentille finie | 2,00 dioptries | 0.066 |

(suite)

| Exemple de lentille considéré | Type de lentille | Addition | Doptique4 |
|---|---|---|---|
| Exemple 6 | Lentille finie | 2,75 dioptries | 0.085 |

Pour chacun des exemples 4 à 6, la valeur maximale Doptique4 est inférieure à 0,3. La condition optique 4 est donc bien remplie par les lentilles des exemples considérés. De plus, les lentilles des exemples respectent aussi la condition Doptique4bis avec une valeur maximale inférieure à 0.1.

La combinaison des différentes conditions exposées ci-dessus n'est satisfaite par aucunes des lentilles ophtalmiques multifocales de l'état de la technique testées par la demanderesse. Ceci vaut à la fois pour la caractérisation optique et pour la caractérisation surfacique.

En caractérisation surfacique, les combinaisons décrites permettent de définir une surface portée par une lentille semi-finie. Pour le cas d'une lentille finie, les combinaisons de caractéristiques exprimées en termes optiques ou en termes surfaciques permettent d'améliorer le confort du porteur portant la lentille.

Les lentilles qu'elles soient finies ou semi-finies peuvent faire partie d'un équipement visuel pour améliorer le confort du porteur de l'équipement visuel.

Par ailleurs, les lentilles proposées ci-dessus peuvent être déterminées par des procédés de détermination. Ceux-ci peuvent être mis en oeuvre dans le cadre d'un procédé d'optimisation de lentille ophtalmique destinée à un porteur de prescription connue. Un tel procédé d'optimisation peut être celui décrit dans le document EP 0 990939 ou le document EP 1 920 291. Ainsi, comme cela est connu de l'homme du métier, la surface des lentilles progressives s'obtient par optimisation numérique à l'aide d'un calculateur, en fixant des conditions aux limites pour un certain nombre de paramètres de la lentille. On peut utiliser comme conditions aux limites un ou plusieurs des critères définis plus haut.

## Revendications

1. Une lentille ophtalmique multifocale progressive destinée à un porteur auquel une addition, une valeur de puissance en vision de loin (VL), une valeur d'axe et d'amplitude d'astigmatisme ont été prescrites, la lentille présentant :

   - pour chaque direction de regard, une puissance et un astigmatisme résultant pour des conditions de port standard avec une distance lentille-oeil de 12 mm, correspondant à une distance (q') entre le centre de rotation de l'oeil et la lentille de 25,5 mm, un angle pantoscopique de 8° et une valeur de galbe de 0°, chaque direction de regard correspondant à un angle d'abaissement ($\alpha$) et un angle d'azimut ($\beta$) ; la lentille comprenant :
   - une zone de vision de loin comportant un point de référence pour la vision de loin correspondant à une direction de regard de référence pour la vision de loin ;
   - une zone de vision de près comportant un point de référence pour la vision de près correspondant à une direction de regard de référence pour la vision de près ;
   - une zone de vision intermédiaire située entre la zone de vision de loin et la zone de vision de près ;
   - une méridienne principale de progression traversant les trois zones et séparant la lentille en une zone temporale et une zone nasale ;
   - un point de référence prisme ($P_{PRP}$) situé au centre d'un segment reliant des micro-gravures ;
   - une croix de montage ($C_M$) située 8° au-dessus du point de référence prisme ($P_{PRP}$) et correspondant à une direction primaire du regard ayant un angle d'abaissement du regard nul et un angle d'azimut nul ;
   - une longueur de progression inférieure à 29°, la longueur de progression étant définie comme la différence d'angle entre la direction primaire du regard et l'angle d'abaissement de regard passant par la méridienne et pour lequel la variation de puissance optique porteur par rapport à la valeur de puissance optique porteur sur le point de référence pour la vision de loin atteint 85 % de l'addition prescrite ;
   - une première direction spécifique ($D_{AmaxN}$) dont l'astigmatisme résultant est une valeur d'astigmatisme résultant maximale pour l'ensemble des directions de regard passant par la zone nasale et par un disque angulaire de diamètre 100° centré sur la direction primaire du regard, la première direction ayant un premier angle d'abaissement du regard ($\alpha_1$) et un premier angle d'azimut ($\beta_1$);
   - une deuxième direction ($D_{AmaxT}$) dont l'astigmatisme résultant est une valeur d'astigmatisme résultant maximale pour l'ensemble des directions de regard passant par la zone temporale et par le disque, la deuxième direction ayant un deuxième angle d'abaissement du regard ($\alpha_2$) et un deuxième angle d'azimut ($\beta_2$);
   - un premier rapport entre :
   - la pente maximale d'astigmatisme résultant et
   - l'addition prescrite inférieur à 0,043 par degrés pour les directions de regard passant par :

- la zone nasale et ayant un angle d'abaissement ($\alpha$) et un angle d'azimut ($\beta$) tels que la valeur absolue de l'angle d'azimut ($\beta$) est inférieure à la valeur absolue du premier angle d'azimut ($\beta_1$) et tels que le produit entre le premier angle d'abaissement ($\alpha_1$) et l'angle d'azimut ($\beta$) est égal au produit entre le premier angle d'azimut ($\beta_1$) et l'angle d'abaissement ($\alpha$), et

- la zone temporale et ayant un angle d'abaissement ($\alpha$) et un angle d'azimut ($\beta$) tels que la valeur absolue de l'angle d'azimut ($\beta$) est inférieure à la valeur du deuxième angle d'azimut ($\beta_2$) et tels que le produit entre le deuxième angle d'abaissement ($\alpha_2$) et l'angle d'azimut ($\beta$) est égal au produit entre le deuxième angle d'azimut ($\beta_2$) et l'angle d'abaissement ($\alpha$); et

- un deuxième rapport entre :

- la valeur maximale d'astigmatisme résultant pour l'ensemble des directions de regard passant par le disque et

- l'addition prescrite inférieur ou égal à 1.

2. La lentille selon la revendication 1, dans laquelle le premier rapport est inférieur à 0,038 par degrés.

3. La lentille selon la revendication 1 ou 2, dans laquelle le deuxième rapport est inférieur ou égal à 0,85.

4. La lentille selon l'une quelconque des revendications 1 à 3, dans laquelle

- la longueur de progression est inférieure à 27°.

5. La lentille selon l'une des revendications 1 à 4, comprenant en outre

- une différence de rapport entre la valeur d'astigmatisme résultant et l'addition prescrite inférieure à 0,3 en valeur absolue pour tout couple de directions de regard symétriques par rapport à la direction primaire du regard et ayant un angle d'abaissement nul et un angle d'azimut inférieur à 52° en valeur absolue ;

6. La lentille selon la revendication 5, dans laquelle

- la différence de rapport entre la valeur d'astigmatisme résultant et l'addition prescrite est inférieure à 0,1 en valeur absolue pour tout couple de directions de regard symétriques par rapport à la direction primaire du regard et ayant un angle d'abaissement nul et un angle d'azimut inférieur à 52° en valeur absolue.

7. Un équipement visuel comprenant une lentille selon l'une des revendications 1 à 6.

**Patentansprüche**

1. Progressive Mehrstärken-Augenlinse, die für einen Träger bestimmt ist, dem die Addition eines Weitsicht-Brechungswertes (VL) und eines Astigmatismusachsen- und Astigmatismusamplitudenwertes verordnet worden sind, wobei die Linse Folgendes umfasst:

- für jede Blickrichtung eine resultierende Brechungsleistung und einen resultierenden Astigmatismus für Standardtragbedingungen mit einem Linsen-Augen-Abstand von 12 mm, der einem Abstand (q') zwischen dem Drehzentrum des Auges und der Linse von 25,5 mm entspricht, einem pantoskopischen Winkel von 8° und einem Rundungswert von 0°, wobei jede Blickrichtung einem Absenkungswinkel ($\alpha$) und einem Azimutwinkel ($\beta$) entspricht;
wobei die Linse Folgendes umfasst:
- eine Weitsichtzone, die einen Referenzunkt für die Weitsicht aufweist, der eine Referenz-Blickrichtung für die Weitsicht entspricht;
- eine Nahsichtzone, die einen Referenzpunkt für die Nahsicht aufweist, der eine Referenz-Blickrichtung für die Nahsicht entspricht;
- eine Zwischensichtzone, die sich zwischen der Weitsichtzone und der Nahsichtzone befindet;
- einen Progressions-Hauptmeridian, der durch die drei Zonen verläuft und die Linse in eine Schläfenzone und eine Nahsichtzone unterteilt;
- einen Prismenreferenzpunkt ($P_{PRP}$), der sich im Zentrum eines Segments befindet, das Mikrogravuren verbindet;
- ein Montagekreuz ($C_M$), das sich 8° über dem Prismenreferenzpunkt ($P_{PRP}$) befindet und einer primären Blickrichtung entspricht, die einen Blickabsenkungswinkel von null und einen Azimutwinkel von null besitzt;

- eine Progressionslänge kleiner als 29°, wobei die Progressionslänge definiert ist als die Winkeldifferenz zwischen der primären Blickrichtung und dem Blickabsenkungswinkel, der durch den Meridian verläuft und für den die Veränderung der Brechungsleistung am Träger in Bezug auf die Brechungsleistung am Träger am Referenzpunkt für die Weitsicht 85 % der verordneten Addition erreicht;

- eine erste spezifische Richtung ($D_{AmaxN}$), deren resultierender Astigmatismus ein maximaler resultierender Astigmatismuswert für die Gesamtheit von Blickrichtungen ist, die durch die nasale Zone und durch eine Ringscheibe mit einem Durchmesser von 100°, die auf die primäre Blickrichtung zentriert ist, verlaufen, wobei die erste Richtung einen ersten Blickabsenkungswinkel ($\alpha_1$) und einen ersten Azimutwinkel ($\beta1$) besitzt;

- eine zweite Richtung ($D_{AmaxT}$), deren resultierender Astigmatismus ein maximaler resultierender Astigmatismuswert für die Gesamtheit von Blickrichtungen ist, die durch die temporale Zone und durch die Scheibe verlaufen, wobei die zweite Richtung einen zweiten Blickabsenkungswinkel ($\alpha2$) und einen zweiten Azimutwinkel ($\beta2$) besitzt;

- ein erstes Verhältnis zwischen:

- der maximalen Steigung des resultierenden Astigmatismus und
- der verordneten Addition kleiner als 0,043 pro Grad für die Blickrichtungen, die

- durch die nasale Zone verlaufen und einen Absenkungswinkel ($\alpha$) und einen Azimutwinkel ($\beta$) haben, derart, dass der Absolutwert des Azimutwinkels ($\beta$) kleiner ist als der Absolutwert des ersten Azimutwinkels ($\beta1$), und derart, dass das Produkt zwischen dem ersten Absenkungswinkel ($\alpha_1$) und dem Azimutwinkel ($\beta$) gleich dem Produkt zwischen dem ersten Azimutwinkel ($\beta1$) und dem Absenkungswinkel ($\alpha$), und

- durch die temporale Zone verlaufen und einen Absenkungswinkel ($\alpha$) und einen Azimutwinkel ($\beta$) haben, derart, dass der Absolutwert des Azimutwinkels ($\beta$) kleiner ist als der Wert des zweiten Azimutwinkels ($\beta_2$), und derart, dass das Produkt zwischen dem zweiten Absenkungswinkel ($\alpha2$) und dem Azimutwinkel ($\beta$) gleich dem Produkt zwischen dem zweiten Azimutwinkel ($\beta_2$) und dem Absenkungswinkel ($\alpha$), und

- ein zweites Verhältnis zwischen:

• dem resultierenden maximalen Astigmatismuswert für die Gesamtheit von Blickrichtungen, die durch die Scheibe verlaufen, und
• der verordneten Addition kleiner oder gleich 1.

2. Linse nach Anspruch 1, wobei das erste Verhältnis kleiner als 0,038 pro Grad ist.

3. Linse nach Anspruch 1 oder 2, wobei das zweite Verhältnis kleiner oder gleich 0,85 ist.

4. Linse nach einem der Ansprüche 1 bis 3, wobei

- die Progressionslänge kleiner als 27° ist.

5. Linse nach einem der Ansprüche 1 bis 4, die weiterhin Folgendes umfasst

- eine Verhältnisdifferenz zwischen dem resultierenden Astigmatismuswert und der verordneten Addition kleiner als 0,3 dem Absolutwert nach für jedes Paar symmetrischer Blickrichtungen in Bezug auf die primäre Blickrichtung, die einen Absenkungswinkel von null und einen Azimutwinkel kleiner als 52° dem Absolutwert nach besitzt, ist.

6. Linse nach Anspruch 5, wobei

- die Verhältnisdifferenz zwischen dem resultierenden Astigmatismuswert und der verordneten Addition kleiner als 0,1 dem Absolutwert nach für jedes Paar symmetrischer Blickrichtungen in Bezug auf die primäre Blickrichtung, die einen Absenkungswinkel von null und einen Azimutwinkel kleiner als 52° dem Absolutwert nach besitzt, ist.

7. Visuelle Ausrüstung, die eine Linse nach einem der Ansprüche 1 bis 6 enthält.

**Claims**

1. Progressive multifocal ophthalmic lens intended for a wearer to whom an addition, a far-vision (FV) power value and an astigmatism axis and amplitude have been prescribed, the lens having:

    - for each gaze direction, a power and a resulting astigmatism under standard wear conditions with a lens-eye distance of 12 mm corresponding to a distance (q') between the eye's rotation centre and the lens of 25.5 mm, a pantoscopic angle of 8° and a face-form angle of 0°, each gaze direction corresponding to a lowering angle ($\alpha$) and an azimuthal angle ($\beta$);

    the lens having:

    - a far-vision zone containing a far-vision reference point corresponding to a far-vision reference gaze direction;
    - a near-vision zone containing a near-vision reference point corresponding to a near-vision reference gaze direction;
    - an intermediate-vision zone located between the far-vision zone and the near-vision zone;
    - a principal progression meridian passing through the three zones and separating the lens into a temporal zone and a nasal zone;
    - a prism reference point ($P_{PRP}$) located at the centre of a segment connecting micro-engravings;
    - a fitting cross ($C_M$) located 8° above the prism reference point ($P_{PRP}$) and corresponding to a primary gaze direction having a gaze lowering angle of zero and an azimuthal angle of zero;
    - a progression length smaller than 29°, the progression length being defined as the angular difference between the primary gaze direction and the lowering angle of the gaze passing through the meridian, for which angle the variation in wearer optical power relative to the wearer optical power value at the far-vision reference point reaches 85% of the prescribed addition;
    - a first specific direction ($D_{AmaxN}$) of which the resulting astigmatism is a maximum resulting astigmatism value for all of the gaze directions passing through the nasal zone and through an angular disc of diameter 100° centred on the primary direction of the gaze, the first direction having a first gaze lowering angle ($\alpha_1$) and a first azimuthal angle ($\beta_1$);
    - a second direction ($D_{AmaxT}$) of which the resulting astigmatism is a maximum resulting astigmatism value for all of the gaze directions passing through the temporal zone and through the disc, the second direction having a second gaze lowering angle ($\alpha 2$) and a second azimuthal angle ($\beta_2$);
    - a first ratio of:
    - the maximum slope of resulting astigmatism; to
    - the prescribed addition

    less than 0.043 by degrees for the gaze directions passing through:
    - the nasal zone and having a lowering angle ($\alpha$) and an azimuthal angle ($\beta$) such that the absolute value of the azimuthal angle ($\beta$) is less than the absolute value of the first azimuthal angle ($\beta_1$) and such that the product of the first lowering angle ($\alpha_1$) and the azimuthal angle ($\beta$) is equal to the product of the first azimuthal angle ($\beta_1$) and the lowering angle ($\alpha$), and
    - the temporal zone and having a lowering angle ($\alpha$) and an azimuthal angle ($\beta$) such that the absolute value of the azimuthal angle ($\beta$) is less than the value of the second azimuthal angle ($\beta_2$) and such that the product of the second lowering angle ($\alpha 2$) and the azimuthal angle ($\beta$) is equal to the product of the second azimuthal angle ($\beta_2$) and the lowering angle ($\alpha$); and
    - a second ratio of:

    - the resulting maximum astigmatism value for all the gaze directions passing through the disc; to
    - the prescribed addition lower than or equal to 1.

2. Lens according to Claim 1, in which the first ratio is lower than 0.038 by degrees.

3. Lens according to Claim 1 or 2, in which the second ratio is lower than or equal to 0.85.

4. Lens according to any one of Claims 1 to 3, in which

    - the progression length is smaller than 27°.

5. Lens according to one of Claims 1 to 4, further comprising

   - a difference in the ratio of the resulting astigmatism value to the prescribed addition lower than 0.3 in absolute value for any pair of gaze directions that are symmetric about the first direction of the gaze and that have a lowering angle of zero and an azimuthal angle lower than 52° in absolute value.

6. Lens according to Claim 5, in which

   - the difference in the ratio of the resulting astigmatism value to the prescribed addition is lower than 0.1 in absolute value for any pair of gaze directions that are symmetric about the first direction of the gaze and that have a lowering angle of zero and an azimuthal angle lower than 52° in absolute value.

7. Piece of visual equipment comprising a lens according to one of Claims 1 to 6.

FIG. 1

**Fig. 2**

FIG. 3

Fig. 4

**Fig. 5**

**Fig. 6**

**Fig.7**

**Fig.8**

Fig.9

**Fig.10**

**Fig.11**

**Fig.12**

Fig.13

Fig.14

**Fig.15**

**Fig.16**

BETA (Tabo) EN DEGRE

**Fig.17**

**Fig.18**

Fig.19

**Fig.20**

Fig.21

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- US 5488442 A
- FR 2704327 A
- EP 0990939 A
- US 5270746 A
- EP 0461624 A
- WO 9812590 A
- FR 2753805 A
- US 6318859 A
- EP 1920291 A

**Littérature non-brevet citée dans la description**

- Ray tracing through progressive ophthalmic lenses. **B. BOURDONCLE.** Proc. Soc. Photo. Opt. Instrum. Eng. 1990